# EUROPEAN PATENT APPLICATION

(11) **EP 4 418 508 A1**
(43) Date of publication of application: **21.08.2024**
(21) Application number: 22880642.8
(22) Date of filing: 22.08.2022
(51) Int. Cl.: H02K 15/095, H02K 3/34, H02K 3/46

(54) **METHOD FOR MANUFACTURING ARMATURE, AND ARMATURE**

(30) Priority: 12.10.2021 JP 2021167556
(71) Applicant: AISIN CORPORATION, Kariya-shi, Aichi 448-8650 (JP)
(72) Inventor: UME, Hiroki, Kariya-shi, Aichi 448-8650 (JP); SONODA, Takahiro, Kariya-shi, Aichi 448-8650 (JP); KUMAGAI, Isao, Kariya-shi, Aichi 448-8650 (JP)
(74) Representative: TBK
(86) International application number: PCT/JP2022/031609
(87) International publication number: WO 2023/062945

(57) **Abstract**

An armature manufacturing method includes an insulating member disposing step for disposing an insulating member on a core so that first portions of the insulating member protrude to one side in an axial direction from end faces of tooth portions on the one side in the axial direction. The armature manufacturing method includes a bending step for bending, toward each of the tooth portions, the first portions of the insulating member that protrude from the end face of each of the tooth portions on the one side. The armature manufacturing method includes a winding looping step for looping a winding around each of the plurality of tooth portions on which the bent first portions are disposed.

## Description

### TECHNICAL FIELD

The present invention relates to an armature manufacturing method and an armature.

### BACKGROUND ART

Hitherto, there are known methods for manufacturing an armature including an insulating member disposed on a core, and armatures. Such an armature is disclosed, for example, in Japanese Unexamined Patent Application Publication No. 2018-125898 (JP 2018-125898 A).

The rotor (armature) described in JP 2018-125898 A includes a winding, a rotor core, and an insulating member disposed between the winding and the rotor core. The insulating member includes an end face covering portion that covers one axial end face of a tooth portion, a side face covering portion that covers the side face of the tooth portion, and a tip portion provided so as to protrude from the other axial end face of the tooth portion to the other side in an axial direction. The tip portion is provided with an engagement portion that is provided so as to protrude to the end side of the tooth portion and engages with the other end face of the tooth portion. Axial movement of the insulating member is restricted by the engagement between the end face of the tooth portion and the engagement portion.

### Related Art Documents

### Patent Documents

Patent Document 1: Japanese Unexamined Patent Application Publication No. 2018-125898 (JP 2018-125898 A)

### SUMMARY OF THE INVENTION

### Problem to be Solved by the Invention

In the rotor (armature) described in JP 2018-125898 A, however, the insulating member is provided with the engagement portion that engages with the end face of the tooth portion. Therefore, the shape of the insulating member is complicated. Thus, there is a demand for an armature manufacturing method and an armature in which the shape of the insulating member can be simplified while restricting the axial movement of the insulating member.

The present invention has been made to solve the above problem, and one object of the present invention is to provide an armature manufacturing method and an armature in which the shape of an insulating member can be simplified while restricting axial movement of the insulating member.

### Means for Solving the Problem

In order to achieve the above object, an armature manufacturing method according to a first aspect of the present invention includes: an insulating member disposing step for disposing an insulating member on a core including a plurality of tooth portions extending along a radial direction so that side faces of the tooth portions of the core are covered with the insulating member and first portions of the insulating member protrude to one side in an axial direction from end faces of the tooth portions on the one side in the axial direction; a bending step for bending, toward each of the tooth portions, the first portions of the insulating member that protrude from the end face of each of the tooth portions on the one side; and a winding looping step for looping a winding around each of the plurality of tooth portions on which the bent first portions are disposed.

As described above, in the armature manufacturing method according to the first aspect of the present invention, the bending step is performed to bend, toward each of the tooth portions, the first portions of the insulating member that protrude from the end face of each of the tooth portions on the one side. Therefore, the first portions bent toward the tooth portion engage with the tooth portion. Thus, the axial movement of the insulating member can be restricted. The axial movement of the insulating member can be restricted by simply bending the first portions without forming engagement portions that engage with the core in advance on the first portions. As a result, the structure of the insulating member can be simplified because there is no need to provide the engagement portions on the insulating member. With those features, the shape of the insulating member can be simplified while restricting the axial movement of the insulating member.

An armature according to a second aspect of the present invention includes: a winding; a core including a plurality of tooth portions around which the winding is looped, the tooth portions extending along a radial direction; and an insulating member disposed between the core and the winding, in which the insulating member is provided so as to cover side faces of the tooth portions and end faces of the tooth portions on one side in an axial direction, and portions of the insulating member that covers the end faces of the tooth portions on the one side are provided so as to cover the end faces on the one side by being bent toward each of the tooth portions.

As described above, in the armature according to the second aspect of the present invention, the portions of the insulating member that covers the end faces of the tooth portions on the one side are provided so as to cover the end faces on the one side by being bent toward each of the tooth portions. Therefore, the portions of the insulating member that are bent toward the tooth portion engage with the tooth portion. Thus, the axial movement of the insulating member can be restricted. The axial movement of the insulating member can be restricted by simply bending the portions without forming engagement portions that engage with the core in advance on the portions. As a result, the structure of the insulating member can be simplified because there is no need to provide the engagement portions on the insulating member. With those features, it is possible to provide the armature in which the shape of the insulating member can be simplified while restricting the axial movement of the insulating member.

### Effects of the Invention

According to the present invention, the shape of the insulating member can be simplified while restricting the axial movement of the insulating member.

### BRIEF DESCRIPTION OF THE DRAWINGS

[FIG. 1] FIG. 1 is a plan view showing the configuration of a stator according to one embodiment.
[FIG. 2] FIG. 2 is an enlarged perspective view of the vicinity of one tooth portion in FIG. 1.
[FIG. 3] FIG. 3 is a sectional view taken along line 200-200 in FIG. 1.
[FIG. 4] FIG. 4 is a perspective view of an insulating member according to one embodiment.
[FIG. 5] FIG. 5 is a flowchart showing a method for manufacturing the stator according to one embodiment.
[FIG. 6] FIG. 6 is a perspective view showing a step of disposing the insulating member on a stator core according to one embodiment.
[FIG. 7] FIG. 7 is a sectional view showing a state of the insulating member before a bending step according to one embodiment.
[FIG. 8] FIG. 8 is a sectional view showing the bending step according to one embodiment.

### MODES FOR CARRYING OUT THE INVENTION

Hereinafter, an embodiment of the present invention will be described with reference to the drawings.

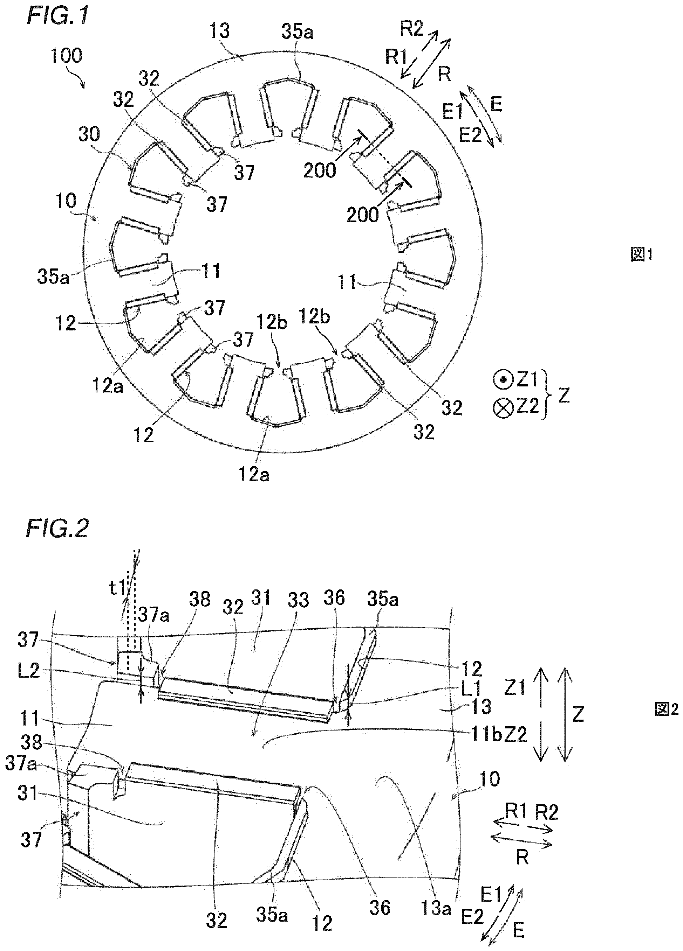

A stator 100 and a method for manufacturing the stator 100 according to the present embodiment will be described with reference to FIGS. 1 to 8. The stator 100 is a stator of a rotating electric machine structured as a motor or a generator. The stator 100 is an example of an "armature" in the claims.

In this description, an "axial direction" is a Z direction (Z1 direction, Z2 direction), a "circumferential direction" is an E direction (E1 direction, E2 direction), and a "radial direction" is an R direction (R1 direction, R2 direction).

### (Configuration of Stator)

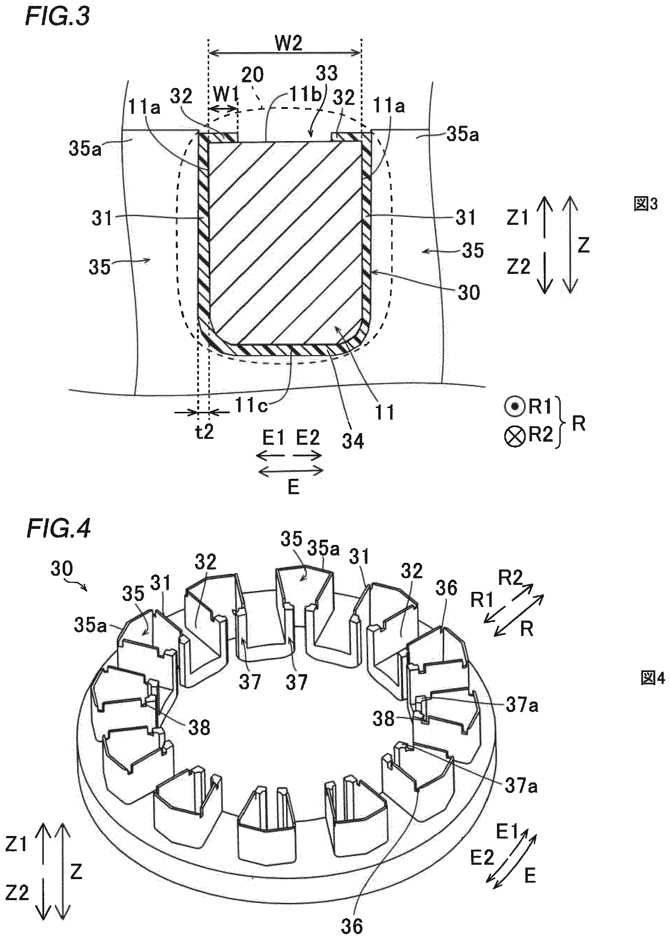

As shown in FIG. 1, the stator 100 includes a stator core 10, a winding 20 (see FIG. 3), and an insulating member 30. The insulating member 30 is disposed between the stator core 10 and the winding 20. That is, the insulating member 30 insulates the stator core 10 and the winding 20. Illustration of the winding 20 is omitted for simplification except in FIG. 3. The stator core 10 is an example of a "core" in the claims.

The stator core 10 includes a plurality of (twelve in the present embodiment) tooth portions 11 extending along the radial direction (R direction). The stator core 10 includes a plurality of slots 12 provided between the tooth portions 11 adjacent to each other in the circumferential direction (E direction). The slot 12 is a semi-open slot that is open on a radially inner side. The stator core 10 includes an annular back yoke portion 13 connecting the plurality of tooth portions 11. Each of the plurality of tooth portions 11 is provided so as to protrude radially inward (to an R1 side) from the back yoke portion 13. That is, the stator 100 is a stator of an inner-rotor brushless motor. The winding 20 is looped around each of the plurality of tooth portions 11 multiple times (see FIG. 3). The back yoke portion 13 is an example of a "yoke portion" in the claims.

As shown in FIG. 2, the insulating member 30 is provided so as to cover side faces 11a (see FIG. 3) of the tooth portion 11 and an end face 11b of the tooth portion 11 on one side (Z1 side) in the axial direction. Specifically, the insulating member 30 includes side face covering portions 31 that cover the side faces 11a of each of the plurality of tooth portions 11 on both sides in the circumferential direction (E direction). The insulating member 30 includes end face covering portions 32 that cover the end face 11b of each of the plurality of tooth portions 11 on the Z1 side. The side face covering portion 31 and the end face covering portion 32 are connected to each other. The end face covering portion 32 is an example of a "first portion" and a "portion" in the claims.

The insulating member 30 is made of a resin such as 66 nylon or PPS (polyphenylene sulfide).

As shown in FIG. 3, each of the pair of side faces 11a of the tooth portion 11 is covered with the side face covering portion 31. That is, the side faces 11a of each of the plurality of tooth portions 11 are covered with the pair of side face covering portions 31. The end face covering portion 32 is provided so as to extend from each of the pair of side face covering portions 31 along the end face 11b on the Z1 side. That is, the end face 11b of each of the plurality of tooth portions 11 is covered with the pair of end face covering portions 32.

The end face covering portion 32 is provided so as to cover the end face 11b by being bent toward the tooth portion 11.

Therefore, the end face covering portion 32 of the insulating member 30 bent toward the tooth portion 11 engages with the tooth portion 11. Thus, axial movement of the insulating member 30 can be restricted. The axial movement of the insulating member 30 can be restricted by simply bending the end face covering portion 32 without forming an engagement portion that engages with the stator core 10 in advance on the end face covering portion 32. As a result, the structure of the insulating member 30 can be simplified because there is no need to provide the engagement portion on the insulating member 30. With those features, it is possible to provide the stator 100 in which the shape of the insulating member 30 can be simplified while restricting the axial movement of the insulating member 30.

Specifically, each of the pair of end face covering portions 32 provided on each of the plurality of tooth portions 11 is bent toward the corresponding tooth portion 11.

A clearance 33 is provided between the pair of end face covering portions 32. That is, a circumferential width W1 of the end face covering portion 32 is smaller than 1/2 of a circumferential width W2 of the tooth portion 11. The width W1 of the end face covering portion 32 is, for example, about 0.5 mm to 4 mm. The width W1 of the end face covering portion 32 is large enough to restrict the axial movement of the tooth portion 11.

The insulating member 30 includes an end face covering portion 34 that covers an end face 11c of each of the plurality of tooth portions 11 on the other side (Z2 side) in the axial direction. The end face covering portion 34 is connected to each of the pair of side face covering portions 31 that covers the side faces 1 1a of the tooth portion 11.

The insulating member 30 includes yoke-side covering portions 35 disposed along the back yoke portion 13. The yoke-side covering portions 35 are provided so as to cover radially outer side faces 12a (see FIG. 1) of the plurality of slots 12. Each of the plurality of yoke-side covering portions 35 is provided with a protruding portion 35a that protrudes to one side in the axial direction from an end face 13a (see FIG. 2) of the back yoke portion 13 on one side (Z1 side) in the axial direction. The protruding portion 35a is provided so as to adjoin the end face covering portion 32. The end face 13a of the back yoke portion 13 and the end face 11b of the tooth portion 11 are flush with each other. The protruding portion 35a is an example of a "second portion" in the claims.

As shown in FIG. 2, a slit 36 is provided between the end face covering portion 32 and the protruding portion 35a. The end face covering portion 32 and the protruding portion 35a are separated from each other by the slit 36. The slits 36 are provided on both sides of the protruding portion 35a in the circumferential direction (E direction). The side face covering portion 31 and the yoke-side covering portion 35 are connected to each other.

The insulating member 30 includes opening-side portions 37 provided on both sides in the circumferential direction (E direction) in a radially inner opening 12b (see FIG. 1) of each of the plurality of slots 12. The opening-side portion 37 restricts movement of the winding 20 (see FIG. 3) looped around the tooth portion 11 to the radially inner side (R1 side). The minimum value of a thickness t1 of the opening-side portion 37 in the circumferential direction (direction E) is larger than a thickness t2 (see FIG. 3) of the side face covering portion 31 in the circumferential direction. The thickness t2 of the side face covering portion 31 is, for example, about 0.1 mm to 1 mm.

Each of the plurality of opening-side portions 37 is provided with a protruding portion 37a that protrudes to one side (Z1 side) in the axial direction from the end face 11b of the tooth portion 11. The protruding portion 37a is provided so as to adjoin the end face covering portion 32 in the radial direction (R1 direction). A protruding length L1 of the protruding portion 35a of the yoke-side covering portion 35 from the end face 13a of the back yoke portion 13 is substantially equal to a protruding length L2 of the protruding portion 37a from the end face 11b of the tooth portion 11. The protruding length L1 and the protruding length L2 are smaller than the width W1 (see FIG. 3) of the end face covering portion 32.

A slit 38 is provided between the protruding portion 37a of the opening-side portion 37 and the end face covering portion 32 that are provided so as to adjoin each other in the radial direction. The end face covering portion 32 and the protruding portion 37a are separated from each other by the slit 38. The side face covering portion 31 and the opening-side portion 37 are connected to each other.

As shown in FIG. 4, the portions of the insulating member 30 provided in the plurality of tooth portions 11 are connected to each other. That is, the insulating member 30 is a single member formed in an annular shape.

### (Method for Manufacturing Stator)

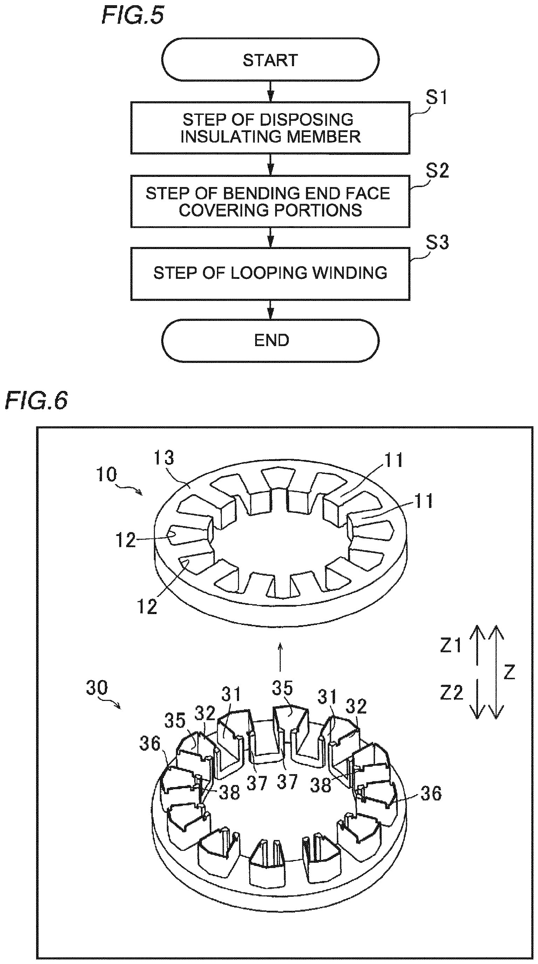

Next, the method for manufacturing the stator 100 will be described with reference to FIGS. 5 to 8.

### (Insulating Member Disposing Step)

As shown in FIG. 5, an insulating member disposing step for disposing the insulating member 30 on the stator core 10 is first performed in step S1. The insulating member disposing step (S1) is a step of disposing the insulating member 30 on the stator core 10 from the other side (Z2 side) in the axial direction. Specifically, as shown in FIG. 6, the insulating member 30 is moved toward the stator core 10 (Z1 side) with the end face covering portions 32 of the insulating member 30 oriented to the Z1 side. The stator core 10 may be moved toward the insulating member 30 (Z2 side).

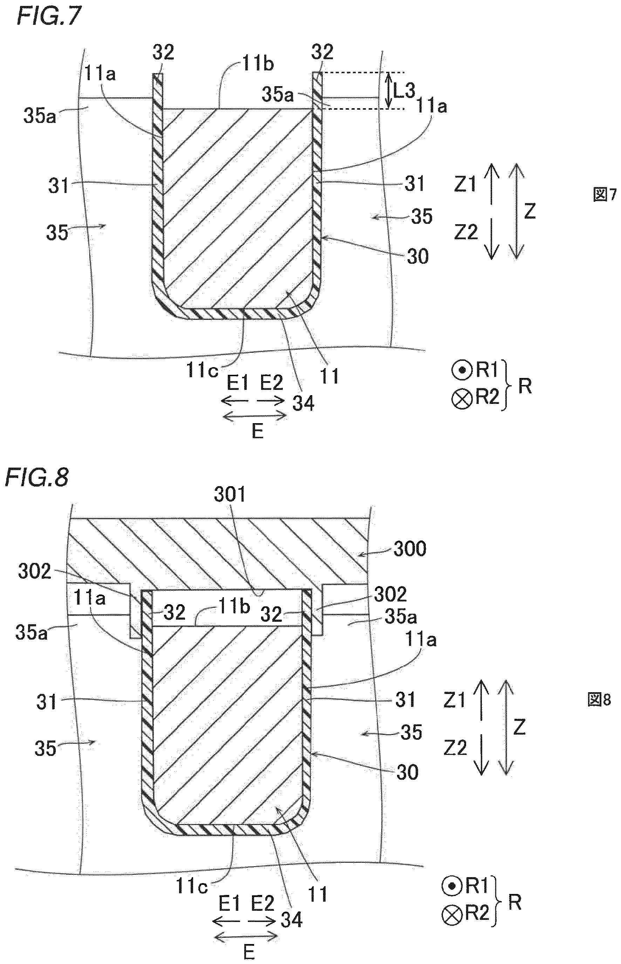

As shown in FIG. 7, the insulating member disposing step (S1) is a step of disposing the insulating member 30 on the stator core 10 so that the side faces 11a of each tooth portion 11 are covered with the insulating member 30 (side face covering portions 31) and the end face covering portions 32 of the insulating member 30 protrude to one side (Z1 side) in the axial direction from the end face 11b of the tooth portion 11 on the Z1 side.

The insulating member disposing step (S1) is a step of disposing the insulating member 30 on the stator core 10 so that the protruding portions 35a protrude to one side (Z1 side) in the axial direction from the end face 13a of the back yoke portion 13 (see FIG. 2).

The insulating member disposing step (S1) is a step of disposing the insulating member 30 on the stator core 10 so that a protruding length L3 (see FIG. 7) of the end face covering portion 32 from the end face 11b of the tooth portion 11 is larger than the protruding length L1 of the protruding portion 35a from the end face 13a of the back yoke portion 13.

Thus, the area that covers the end face 11b of the tooth portion 11 with the end face covering portion 32 can be increased. Further, the axial length of the insulating member 30 can be prevented from becoming excessively large compared to a case where the protruding length L1 of the protruding portion 35a is equal to or larger than the protruding length L3 of the end face covering portion 32.

When the insulating member 30 is disposed on the stator core 10, the end face covering portion 32 is provided so as to extend along the axial direction (Z direction). That is, the protruding length L3 of the end face covering portion 32 is substantially equal to the width W1 (see FIG. 3) of the end face covering portion 32.

Next, as shown in FIG. 5, a bending step for bending the end face covering portions 32 toward the tooth portions 11 is performed in step S2.

Therefore, the end face covering portion 32 bent toward the tooth portion 11 engages with the tooth portion 11. Thus, the axial movement of the insulating member 30 can be restricted. The axial movement of the insulating member 30 can be restricted by simply bending the end face covering portion 32 without forming the engagement portion that engages with the stator core 10 in advance on the end face covering portion 32. As a result, the structure of the insulating member 30 can be simplified because there is no need to provide the engagement portion on the insulating member 30. With those features, the shape of the insulating member 30 can be simplified while restricting the axial movement of the insulating member 30.

Since the shape of the insulating member 30 is simplified, the shape of a mold for forming the insulating member 30 can be simplified. Since the insulating member 30 is not provided with the engagement portion that engages with the end face 11b of the stator core 10, interference between the stator core 10 and the insulating member 30 can be reduced when the insulating member 30 is disposed (attached) on the stator core 10 from the other side in the axial direction. As a result, the insulating member 30 can easily be disposed on the stator core 10.

Since the winding 20 is looped around the tooth portion 11 with the end face covering portion 32 bent toward the tooth portion 11, the end face covering portion 32 can be prevented from being caught on the winding 20 compared to a case where the end face covering portion 32 is provided so as to extend along the axial direction.

As shown in FIG. 8, the insulating member disposing step (S1) is a step of bending the end face covering portions 32 toward the tooth portion 11 by pressing the end face covering portions 32 from one side (Z1 side) in the axial direction with a punch member 300. The punch member 300 is provided with a flat pressing surface 301 that presses the end face covering portions 32. The pair of end face covering portions 32 provided on both sides of the tooth portion 11 in the circumferential direction is simultaneously bent by the pressing surface 301.

The punch member 300 is provided with regulating portions 302 that are provided on both sides of the pressing surface 301 in the circumferential direction (E direction) and extend along the axial direction. The regulating portions 302 move to the Z2 side along the side face covering portions 31 when the punch member 300 (pressing surface 301) moves to the Z2 side while bending the end face covering portions 32. Thus, circumferential movement of the punch member 300 is restricted by the regulating portions 302. The punch member 300 is an annular member. That is, the end face covering portions 32 for the plurality of tooth portions 11 are bent all at once by the annular punch member 300 (pressing surface 301). The end face covering portions 32 may be bent for each tooth portion 11 by the punch member.

The bending step (S2) is a step of plastically deforming the end face covering portions 32 by bending the end face covering portions 32 while heating the end face covering portions 32.

Therefore, the end face covering portions 32 can be softened by being heated. Thus, the end face covering portions 32 can easily be bent with a relatively small force. By plastically deforming the end face covering portions 32, the bent end face covering portions 32 can be prevented from recovering their original shapes. Thus, the axial movement of the stator core 10 can be prevented more reliably by the end face covering portions 32.

Specifically, the bending step (S2) is a step of bending the end face covering portions 32 while heating the end face covering portions 32 by pressing the end face covering portions 32 with the heated punch member 300.

The bending step (S2) is a step of bending the end face covering portions 32 while heating the end face covering portions 32 so that the temperature of each end face covering portion 32 is equal to or higher than the glass transition point of the insulating member 30 and lower than the melting point of the insulating member 30. That is, the end face covering portions 32 formed of the resin are heated to a temperature equal to or higher than the glass transition point, thereby altering from a hard glass state to a soft rubber state.

Therefore, the end face covering portions 32 are softened. Thus, the end face covering portions 32 can easily be bent with a relatively small force. Since the temperature of the end face covering portion 32 is lower than the melting point of the insulating member 30, the end face covering portion 32 can be prevented from melting.

The bending step (S2) is a step of bending the end face covering portions 32 to bring the end face covering portions 32 into close surface contact with the tooth portion 11.

Therefore, no gap is formed between the end face covering portions 32 and the end face 11b of the tooth portion 11. Thus, the axial movement of the insulating member 30 can be restricted more reliably.

Specifically, the bending step (S2) is a step of pressing the end face covering portions 32 against the end face 11b of the tooth portion 11 with the pressing surface 301 of the punch member 300 that is flat similarly to the end face 11b.

The bending step (S2) is a step of bending the pair of end face covering portions 32 toward the tooth portion 11 so as to form the clearance 33 (see FIG. 3) between the pair of end face covering portions 32 with the pair of end face covering portions 32 bent toward the tooth portion 11. Specifically, the bending step (S2) is a step of bending, toward the tooth portion 11, the pair of end face covering portions 32 protruding from the end face 1 1b by the protruding length L3 smaller than 1/2 of the circumferential width W2 of the tooth portion 11.

Therefore, the pair of bent end face covering portions 32 can be prevented from overlapping each other. As a result, it is possible to more reliably prevent a gap from being formed between the end face covering portions 32 and the end face 11b of the tooth portion 11.

The bending step (S2) is a step of bending the end face covering portions 32 without bending the protruding portions 35a of the yoke-side covering portions 35.

Therefore, when the winding 20 is looped around the end face covering portions 32, the winding 20 can be looped around the tooth portion 11 while being supported by the protruding portions 35a because the protruding portions 35a extend along the axial direction without being bent. As a result, the work of looping the winding 20 around the tooth portion 11 can be facilitated. Further, the pressure applied by the punch member 300 can be reduced compared to a case where both the end face covering portions 32 and the protruding portions 35a are bent. As a result, the equipment for driving the punch member 300 can be downsized.

The bending step (S2) is a step of bending the end face covering portions 32 without bending the protruding portions 37a of the opening-side portions 37. That is, the bending step (S2) is a step of applying a pressure by the punch member 300 while the punch member 300 is in contact with the end face covering portions 32 and not in contact with the protruding portions 35a and the protruding portions 37a.

The bending step (S2) is a step of bending the end face covering portions 32 without bending the protruding portions 35a of the yoke-side covering portions 35 out of the end face covering portions 32 and the protruding portions 35a that are separated from each other via the slits 36.

Since the end face covering portions 32 and the protruding portions 35a are separated from each other by the slits 36, the protruding portions 35a can be prevented from being bent along with the end face covering portions 32 when the end face covering portions 32 are bent.

The bending step (S2) is a step of bending the end face covering portions 32 without bending the protruding portions 37a of the opening-side portions 37 out of the end face covering portions 32 and the protruding portions 37a that are separated from each other via the slits 38. Since the end face covering portions 32 and the protruding portions 37a are separated from each other by the slits 38, the protruding portions 37a can be prevented from being bent along with the end face covering portions 32 when the end face covering portions 32 are bent.

As shown in FIG. 5, a winding looping step for looping the winding 20 (see FIG. 3) around each of the plurality of tooth portions 11 on which the bent end face covering portions 32 are disposed is performed in step S3. Specifically, the winding looping step (S3) is a step of looping the winding 20 around the tooth portion 11 with the end face covering portions 32 in close contact with the end face 11b of the tooth portion 11. The winding looping step (S3) is a step of looping the winding 20 around the tooth portion 11 from above the end face covering portions 32 after the temperature of each of the end face covering portions 32 heated in the bending step (S2) has been reduced to a room temperature by cooling.

### [Modifications]

The embodiment disclosed herein should be construed as illustrative in all respects and not restrictive. The scope of the present invention is shown by the claims rather than by the above description of the embodiment, and includes all changes (modifications) that fall within the meaning and scope equivalent to the claims.

For example, the above embodiment illustrates the example in which the end face covering portion 32 (first portion, portion) is bent while being heated, but the present invention is not limited to this. The end face covering portion 32 may be bent without being heated. In this case, ABS, PE (polyethylene), PP (polypropylene), or the like is used for the insulating member 30.

The above embodiment illustrates the example in which the end face covering portion 32 (first portion, portion) is bent while being heated by bending the end face covering portion 32 with the heated punch member 300, but the present invention is not limited to this. For example, the end face covering portion 32 may be bent by the punch member 300 while being directly heated with a laser or infrared rays. In this case, the punch member 300 may or may not be heated.

The above embodiment illustrates the example in which the pair of end face covering portions 32 (first portions, portions) is bent so as to form the clearance 33 between the pair of end face covering portions 32, but the present invention is not limited to this. For example, the pair of end face covering portions 32 may be bent so that the clearance is not formed between the pair of end face covering portions 32 (so that the pair of end face covering portions 32 overlaps each other).

The above embodiment illustrates the example in which the end face covering portion 32 (first portion, portion) is bent without bending the protruding portion 35a (second portion) of the yoke-side covering portion 35, but the present invention is not limited to this. For example, the protruding portion 35a may be bent together with the end face covering portion 32. In this case, the slit 36 need not be provided. Further, the above embodiment illustrates the example in which the end face covering portion 32 is bent without bending the protruding portion 37a of the opening-side portion 37, but the protruding portion 37a may be bent together with the end face covering portion 32. In this case, the slit 38 need not be provided.

The above embodiment illustrates the example in which the protruding length L3 of the end face covering portion 32 (first portion, portion) from the end face 11b is larger than the protruding length L1 of the protruding portion 35a (second portion) from the end face 13a, but the present invention is not limited to this. The protruding length L3 may be equal to or smaller than the protruding length L1.

The above embodiment illustrates the example of the inner-rotor brushless motor in which the tooth portion 11 protrudes radially inward from the back yoke portion 13 (yoke portion), but the present invention is not limited to this. For example, the present invention may be applied to a stator of an outer-rotor brushless motor in which the tooth portion 11 protrudes radially outward from the yoke portion, or to a rotor of a brushed motor.

The above embodiment illustrates the example in which the end face covering portion 32 (first portion, portion) is bent by the flat pressing surface 301 of the punch member 300, but the present invention is not limited to this. The pressing surface of the punch member that bends the end face covering portion 32 may be inclined with respect to the end face 11b of the tooth portion 11. Further, the pressing surface of the punch member may be curved (for example, curved convexly to the Z1 side).

The above embodiment illustrates the example in which the insulating member 30 is the single annular member, but the present invention is not limited to this. Separate insulating members may be provided for the individual tooth portions 11. For example, the insulating member 30 need not include the end face covering portion 34 connected to each of the pair of side face covering portions 31. In that case, the insulating member 30 may be disposed on the stator core 10 not only from the other side (Z2 side) in the axial direction as in the above embodiment, but also from one side (Z1 side) in the axial direction or from the radially inner side.

### Description of the Reference Numerals

10 ... stator core (core), 11 ... tooth portion, 1 1a ... side face, 11b ... end face (end face of tooth portion), 13 ... back yoke portion (yoke portion), 13a ... end face (end face of yoke portion), 20 ... winding, 30 ... insulating member, 32 ... end face covering portion (first portion) (portion), 33 ... clearance, 35a ... protruding portion (second portion), 36 ... slit, 100 ... stator (armature), L1 ... protruding length (protruding length of second portion), L3 ... protruding length (protruding length of first portion)

## Claims

1. An armature manufacturing method comprising:
an insulating member disposing step for disposing an insulating member on a core including a plurality of tooth portions extending along a radial direction so that side faces of the tooth portions of the core are covered with the insulating member and first portions of the insulating member protrude to one side in an axial direction from end faces of the tooth portions on the one side in the axial direction;
a bending step for bending, toward each of the tooth portions, the first portions of the insulating member that protrude from the end face of each of the tooth portions on the one side; and
a winding looping step for looping a winding around each of the plurality of tooth portions on which the bent first portions are disposed.

2. The armature manufacturing method according to claim 1, wherein the bending step is a step of disposing the insulating member on the core from the other side in the axial direction.

3. The armature manufacturing method according to claim 1, wherein
the bending step is a step of plastically deforming the first portions by bending the first portions while heating the first portions.

4. The armature manufacturing method according to claim 3, wherein the bending step is a step of bending the first portions while heating the first portions so that a temperature of each of the first portions is equal to or higher than a glass transition point of the insulating member and lower than a melting point of the insulating member.

5. The armature manufacturing method according to claim 1, wherein the bending step is a step of bending the first portions to bring the first portions into close surface contact with each of the tooth portions.

6. The armature manufacturing method according to claim 1, wherein the bending step is a step of bending, toward each of the tooth portions, a pair of the first portions provided on both sides of each of the tooth portions in a circumferential direction so as to form a clearance between the pair of the first portions with the pair of the first portions bent toward each of the tooth portions.

7. The armature manufacturing method according to claim 1, wherein:
the insulating member disposing step is a step of disposing the insulating member on the core so that second portions of the insulating member disposed along an annular yoke portion of the core that connects the plurality of tooth portions and provided so as to adjoin the first portions protrude to the one side in the axial direction from an end face of the yoke portion on the one side in the axial direction with the insulating member disposed on the core; and
the bending step is a step of bending the first portions without bending the second portions.

8. The armature manufacturing method according to claim 7, wherein the bending step is a step of bending the first portions without bending the second portions out of the first portions and the second portions that are separated from each other by slits provided between the first portions and the second portions.

9. The armature manufacturing method according to claim 7, wherein the insulating member disposing step is a step of disposing the insulating member on the core so that a protruding length of the first portions from the end faces of the tooth portions on the one side is larger than a protruding length of the second portions from the end face of the yoke portion on the one side.

10. An armature comprising:
a winding;
a core including a plurality of tooth portions around which the winding is looped, the tooth portions extending along a radial direction; and
an insulating member disposed between the core and the winding, wherein
the insulating member is provided so as to cover side faces of the tooth portions and end faces of the tooth portions on one side in an axial direction, and
portions of the insulating member that covers the end faces of the tooth portions on the one side are provided so as to cover the end faces on the one side by being bent toward each of the tooth portions.
